# EUROPEAN PATENT SPECIFICATION

(11) **EP 1 475 304 B1**
(45) Date of publication and mention of the grant of the patent: **02.09.2009**
(21) Application number: 03010467.3
(22) Date of filing: 09.05.2003
(51) Int. Cl.: B64C 3/28

(54) **Aircraft wing**
Flugzeugflügel
Aile d'aéronef

(43) Date of publication of application: 10.11.2004
(73) Proprietor: PILATUS FLUGZEUGWERKE AG, 6371 Stans (CH)
(72) Inventor: Verdan, Patrice R., 6373 Ennetbürgen NW (CH)
(74) Representative: OK pat AG

(56) References cited:
- DE-A- 10 129 576
- US-A- 2 693 922
- US-A- 4 667 906
- JOHN L K: "Wing Leading Edge Design With Composites To Meet Bird Strike Requirements" COMPOSITES IN MANUFACTURING - CASE STUDIES, 1991, pages 3-18, XP008022816 USA

## Description

The present invention relates to an aircraft wing or empennage as defined in claim 1.

An impact of a bird or a hailstone on an aircraft is quite common and inevitable. Such an incidence may be very dangerous for the pilot, the occupants and as well endanger the flight worthiness of the aircraft. Thus the risk for a catastrophic accident is quite high, especially during a low-altitude flight.

Conventional aircraft wings with a sub-sonic wing section having a blunt leading edge with a relative thin structure in accordance with a desired lightweight design are not able to withstand an impact of a big object. Thus objects impacting on the wing cause large damage to the structure of the same. Specifically, high bird masses and high impact speeds determine the main parameters for the magnitude of destruction.

Therefore, an object of the present invention is to provide an improved aircraft wing which is able to withstand a strike of a large bird, a hailstone or another foreign object at a high speed. Furthermore it is an object of the present invention to provide an improved protection of the expensive and fragile wing structure and to propose a better replaceability of the wing protecting parts.

The aircraft wing of the invention is characterized by what is said in claim 1. Other embodiments of the invention are characterized by the features presented in the dependent claims.

The aircraft wing according to the invention allows distributing the impact energy of a strike over a large part of the leading edge of the wing, which acts like a bumper, so that no local failure occurs. Thus the stress level can be reduced, so that according to the invention this new construction is able to protect the structural parts behind said complementary leading edge.

The US Patent 4,667,906 describes a repleacable tip for an aircraft leading edge. It is shown, that a metallic abrasion shield glove is mounted directly to the leading edge of a wing. The metallic abrasion shield glove forms a hollow, into which a resilient cushion insert is fixedly attached. A strong impact, which exceeds the damping capacity of the resilient cushion insert, will cause a deterioration of the leading edge. Also often carried out replacements will lead at the proposed embodiment to damage of the mounting parts of the leading edge.

The US Patent 2,693,922, which is considered the closest prior art, describes a leading edge structure for airfoil, wherein the customary structure of a metal sheet and a stiffener is stiffened additionally by the use of polystyrene foam, which is bonded with an adhesive to all inner surfaces. The bonded Styrofoam® stabilizes the sheet and resists to the greater part of the occurring shear stresses.

Another advantage of the aircraft wing according to the invention is that it can be easily and inexpensively manufactured and easily and quickly installed.

The invention is usable to protect all sections of an airplane with similar shape: wings, fins, vertical and horizontal stabilizers, empennage, etc.

Other characteristics and advantages of the present invention will become apparent on reading the description made hereafter with reference to the accompanying drawings, given solely by way of example, wherein:
FIG. 1 is a schematic illustration of a conventional structure of an aircraft wing with an object in front of it;
FIG. 2 shows a fracture at a conventional wing leading edge as a consequence of a bird strike;
Fig. 3 and 4 illustrate the possibility of a catastrophic accident;
FIG. 5 is a schematic illustration of the leading edge of an improved aircraft wing, according to the invention;
FIG. 6 is a perspective representation of a complementary part of an aircraft wing, according to the invention with an object in front of it;
FIG. 7 shows the begin of an impact of the object according to Fig. 6;
FIG. 8 shows the maximal deformation due to an impact with a very heavy object;
FIG. 9 shows the end of the impact of the object according to Fig. 6.

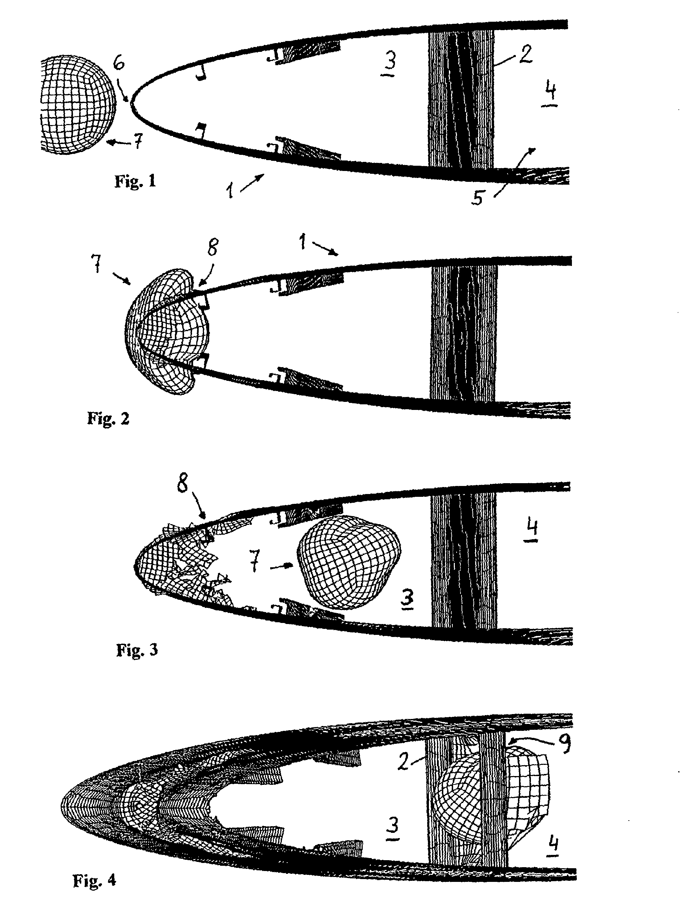

Fig. 1 illustrates a conventional structure of a wing 1 having internal spar 2, ribs 3, rear torsion box 4 and forward torsion box 5, which are normally employed as fuel tank. The wing 1 is covered with thin plates or sheets of a suitable light material. The leading edge of the wing 1 is the summit or equator line 6 of a bonded sheet covering the front side of the wing 1. A ball 7 in front of the leading edge represents schematically a bird before a collision occurs. Figures 2 to 4, which are self-explanatory, depict the same conventional wing 1 in sequential moments during the collision. In the case of Fig. 3, the bird has invaded the forward torsion box 5 through a breach 8 in the area of the leading edge 6. The fractures at the wing 1 due to a bird strike in the case of Fig. 4 are catastrophic, if the bird, as shown in Fig. 4, arises the rear torsion box 4 through a breach 9 in the spar 2. In such cases, which are possible since the developed forces may increase to an unacceptable level, the structure of the wing 1 fails due to local overstress and the fuel tank can be perforated.

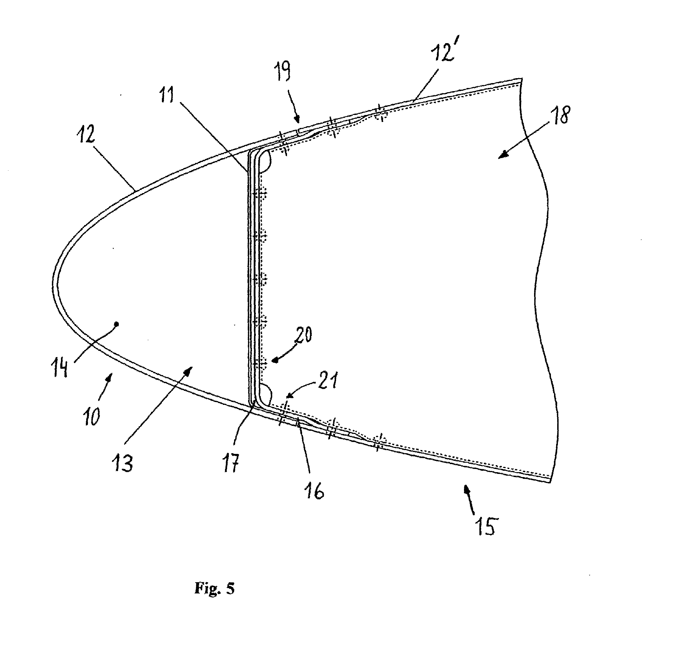

Fig. 5 shows the basic design of a leading edge for a wing which, according to the invention, has a separate complementary part 10 which may be regarded as a bird strike leading edge. This leading edge 10 is designed in a way that it can be mounted respective dismounted if a foreign object strike happened. This allows very short repair times so that the aircraft can be operational very soon. Between a back sheet 11 and a cover sheet 12 in the front region of the complementary part 10, there is a space 13 filled with a high-energy absorption material 14 which constitutes a flexible core of the leading edge. The cover sheet 12 is also flexible to some extent. According to the invention, the core 14 is intended to carry a high amount of energy and may be made out of high-energy absorption foam or out of a honeycomb material, which is able to carry high energy. The flexibility of the cover sheet 12 can be reached or increased by a fiber reinforced material, e.g. carbon fibers, but preferably glass fibers, Kevlar or other high-energy absorbing fibers. At the back, the sheet 11 of the core 14 is also a fiber reinforced material, so that the complementary part 10 builds a beam protecting the rear structural part 15 of the wing. The front end of the actual or structural part 15 of the airplane wing is shortened relatively to a wing with a normal design, but completed with said complementary leading edge 10, so as to obtain the normal design which would have a normal wing of the airplane in question. Between the back sheet 11 and a forward spar 16 of the structural part 15 of the wing a small gap 17 may be built in.

As seen in Fig. 5, the forward part of the torsion box 18 is provided with a small peripheral recess or deformation 19 to accommodate the end zones or flange of the cover sheet 12 of the complementary part 10 and of the skin 12' of the part 15 in such a way to preferably identically reproduce the form of the external surface of a wing having a normal design without disturbing its aerodynamic properties.

The construction illustrated in Fig. 5 with a quite flexible core 14 allows a big deformation. So the forces developed by the impact can be distributed span-wise over a large area. This gives the advantage that the local stresses are relatively low and the structure behind the complementary strike leading edge 10 does not fail. Under large deformation during a strike of a bird or an other foreign object, the back sheet 11 may come into contact with the front spar 16. Under contact the front spar 16 is also used to distribute the load from the strike. Important for a good load distribution of the forces over the fastening rivets and/or screws 21 is of course also the lay up of the fiber reinforced material. The fibers are preferably laid in a way that the force distribution is primarily span-wise. But for local effects all other directions have to be also considered.

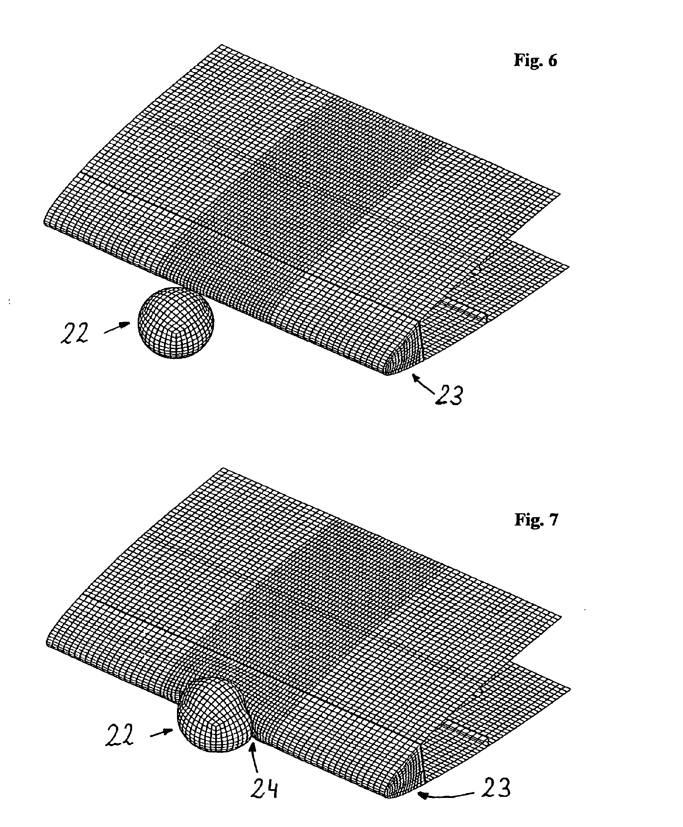

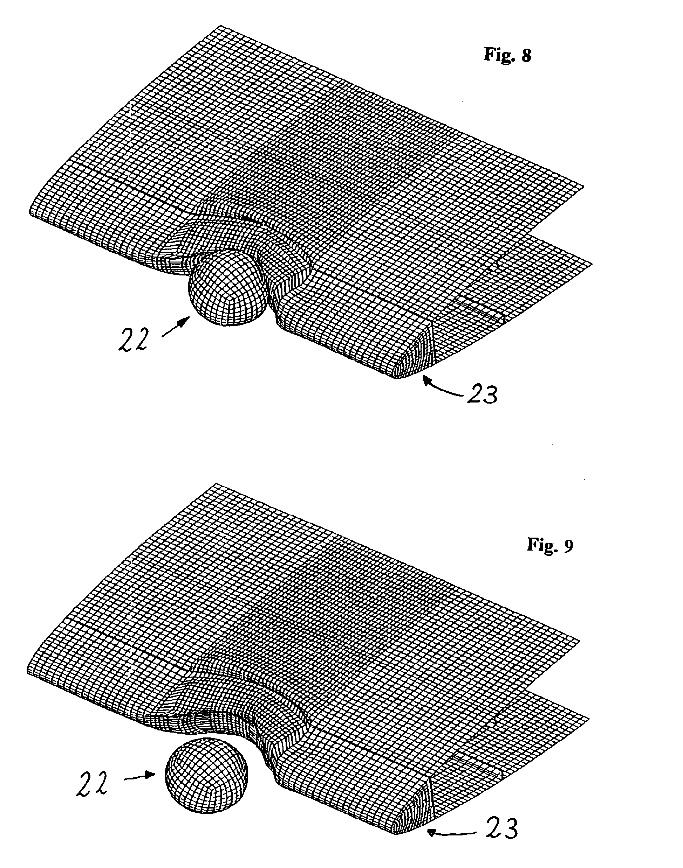

Fig. 6 to 9 are self-explanatory and show a simulation of sequences of an impact of a bird 22 at high speed on the complementary wing leading edge 23. Thus also the structure behind the leading edge may be locally deformed, as seen in the Figures 8 and 9. If the size of the bird 22 and/or the speed of the aircraft are not extremely high the deformation 24 (Fig. 7) will be only at the complementary leading edge 23 itself.

The construction according to the invention provides an adequate protection against bird strike and strikes by other foreign objects. With small birds at a relative low speed the structure is able to withstand it without any damage. In the mid range related to speed and/or mass, the leading edge is partially damaged and can be repaired locally. If necessary, the complementary leading edge 23 can be replaced so the aircraft is very soon back to operation. With big birds or other foreign objects at very high speed, a local deformation of the main structure , e.g. forward spar 16 or skin 12', is possible, as shown in Fig. 9. However, by optimizing the lay up, specially of the leading edge this deformation can be minimized. Also with the slightly deformed forward structure the wing is still able to carry flight loads. So the degradation in flight performance can be kept to a minimum allowing later full repair.

## Claims

1. A wing for an airplane, aircraft or the like having a structural part (15) and a separable complementary part (10; 23) mountable to the structural part (15) of the wing, reproducing the form of a wing,
wherein said complementary part (10; 23) constitutes at least partially a leading edge of the wing and comprises a flexible cover sheet (12) and a back sheet (11),
wherein said flexible cover sheet (12) and said back sheet (11) form a space (13) filled with an energy absorption material which constitutes a flexible core (14) of said leading edge
and wherein the complementary part (10; 23) is mounted on a forward spar (16) and wherein said forward spar (16) is mounted on the structural part (15) and wherein the complementary part (10; 23) with its back sheet (11) and the structural part (15) with its forward spar (16) form a gap (17) inbetween, which is connected to a peripheral small recess (19) located in a lateral skin (12') of the structural part (15).

2. The wing according to claim 1, wherein the complementary part (10; 23) comprises
said flexible core (14) consisting of a high-energy absorption foam and/or a honeycomb material and/or any material which is able to carry a high amount of kinetic energy
said flexible cover sheet (12) comprising a fibre reinforced material, e.g. glass fibres, Kevlar or other high-energy absorbing fibres,
so that said complementary part (10; 23) absorbs a high amount of kinetic energy of an impacting object (22).

3. The wing according to one of the claims 1 or 2, wherein the back sheet (11) consists of a fibre reinforced material and the complementary part (10; 23) builds a beam protecting the rear structural part (15) of the wing.

4. The wing according to one of the preceding claims, wherein the front end of the structural part (15) is a torsion box (18) with said peripheral small recess (19) to accommodate the flexible cover sheet (12) of the complementary part (10; 23) such to reproduce the form of the external surface of a wing.

## Patentansprüche

1. Flügel für ein Flugzeug, Luftfahrzeug oder dergleichen mit einem Strukturteil (15) und einem abtrennbaren komplementären Teil (10; 23), der an dem Strukturteil (15) des Flügels montiert werden kann, wodurch die Form eines Flügels nachgebildet wird,
wobei der komplementäre Teil (10; 23) mindestens teilweise eine Vorderkante des Flügels bildet und eine biegsame Deckfolie (12) und eine Rückseitenfolie (11) umfasst,
wobei die biegsame Deckfolie (12) und die Rückseitenfolie (11) einen Raum (13) bilden, der mit einem energieabsorbierenden Material gefüllt ist, das einen biegsamen Kern (14) der Vorderkante bildet
und wobei der komplementäre Teil (10; 23) an einem Vorderholm (16) montiert ist und wobei der Vorderholm (16) am Strukturteil (15) montiert ist und wobei der komplementäre Teil (10; 23) mit seiner Rückseitenfolie (11) und der Strukturteil (15) mit seinem Vorderholm (16) dazwischen einen Spalt (17) bilden, der mit einer kleinen am Umfang verlaufenden Vertiefung (19) verbunden ist, die in einer seitlichen Haut (12') des Strukturteils (15) angeordnet ist.

2. Flügel nach Anspruch 1, wobei der komplementäre Teil (10; 23) umfasst: den biegsamen Kern (14), der aus einem hochgradig energieabsorbierenden Schaumstoff und/oder einem bienenwabenartigen Material und/oder jeglichem Material gebildet ist, das geeignet ist, eine große Menge an kinetischer Energie aufzunehmen,
wobei die biegsame Deckfolie (12) ein faserverstärktes Material umfasst, wie beispielsweise Glasfasern, Kevlar oder andere hochgradig energieabsorbierende Fasern,
so dass der komplementäre Teil (10; 23) eine große Menge der kinetischen Energie eines aufprallenden Gegenstands (22) absorbiert.

3. Flügel nach einem der Ansprüche 1 oder 2, wobei die Rückseitenfolie (11) aus einem faserverstärkten Material besteht und der komplementäre Teil (10; 23) einen Ausleger bildet, der den dahinterliegenden Strukturteil (15) des Flügels schützt.

4. Flügel nach einem der vorhergehenden Ansprüche, wobei das Vorderende des Strukturteils (15) ein Torsionskasten (18) ist, wobei die kleine am Umfang verlaufenden Vertiefung (19) die biegsame Deckfolie (12) des komplementären Teils (10; 23) derart aufnimmt, dass die Form der Außenfläche eines Flügels nachgebildet wird.

## Revendications

1. Aile pour avion, aéronef ou analogue comportant une partie structurelle (15) et une partie complémentaire séparable (10 ; 23) pouvant être montée sur la partie structurelle (15) de l'aile, en reproduisant la forme d'une aile,
dans laquelle ladite partie complémentaire (10 ; 23) constitue au moins partiellement un bord d'attaque de l'aile et comprend une feuille de couverture flexible (12) et une feuille arrière (11),
dans laquelle ladite feuille de couverture flexible (12) et ladite feuille arrière (11) forment un espace (13) rempli d'un matériau d'absorption d'énergie qui constitue un coeur flexible (14) dudit bord d'attaque
et dans laquelle la partie complémentaire (10 ; 23) est montée sur un longeron avant (16) et dans laquelle ledit longeron avant (16) est monté sur la partie structurelle (15) et dans laquelle la partie complémentaire (10 ; 23) avec sa feuille arrière (11) et la partie structurelle (15) avec son longeron avant (16) forment un espace (17) entre elles, lequel est raccordé à une petite encoche périphérique (19) située dans un revêtement latéral (12') de la partie structurelle (15).

2. Aile selon la revendication 1, dans laquelle la partie complémentaire (10 ; 23) comprend
ledit coeur flexible (14) constitué d'une mousse à haute absorption d'énergie et/ou d'un matériau en nid d'abeille et/ou de tout matériau qui est capable de porter une grande quantité d'énergie cinétique
ladite feuille de couverture flexible (12) comprenant un matériau renforcé par des fibres, par ex. des fibres de verre, du Kevlar ou autres fibres à haute absorption d'énergie,
de sorte que ladite partie complémentaire (10 ; 23) absorbe une grande quantité d'énergie cinétique d'un objet percutant (22).

3. Aile selon l'une des revendications 1 ou 2, dans laquelle la feuille arrière (11) se compose d'un matériau renforcé par des fibres et la partie complémentaire (10 ; 23) forme une poutre protégeant la partie structurelle arrière (15) de l'aile.

4. Aile selon l'une des revendications précédentes, dans laquelle l'extrémité avant de la partie structurelle (15) est un caisson de torsion (18) avec ladite petite encoche périphérique (19) pour recevoir la feuille de couverture flexible (12) de la partie complémentaire (10 ; 23) de façon à reproduire la forme de la surface externe d'une aile.
